# EUROPEAN PATENT APPLICATION

(11) **EP 1 494 465 A1**
(43) Date of publication of application: **05.01.2005**
(21) Application number: 03715488.7
(22) Date of filing: 27.03.2003
(51) Int. Cl.: H04N 5/32

(54) **IMAGE ENLARGING DEVICE AND METHOD**

(30) Priority: 29.03.2002 JP 2002096514
(71) Applicant: MATSUSHITA ELECTRIC INDUSTRIAL CO., LTD., Kadoma-shi, Osaka 571-8501 (JP)
(72) Inventor: MIYAZAKI, Toshiro, Nara-shi Nara 631-0062 (JP)
(74) Representative: Eisenführ, Speiser & Partner
(86) International application number: PCT/JP2003/003808
(87) International publication number: WO 2003/084215

(57) **Abstract**

When an image signal processing circuit first compresses the image and an image sizing circuit then enlarges the compressed image, the resolution, particularly the vertical resolution, is degraded by the enlarging process and overall image quality thus drops. This problem is solved by an image cropping circuit that crops the photographed image to a defined image area without any image compression when a second zoom switch is operated. This improves the resolution of the output image and eliminates the time needed for image compression and other signal processing operations. An enlarged image can thus be easily and immediately presented.

## Description

### BACKGROUND OF THE INVENTION

The present invention relates to an image enlarging apparatus and an image enlarging method that can immediately produce a digital image zooming effect with little image degradation.

Three of the most desirable features on the latest video cameras are a digital zoom function, high image quality, and easy operation. A conventional image enlarging system such as used in video cameras to provide a digital zoom function is described below.

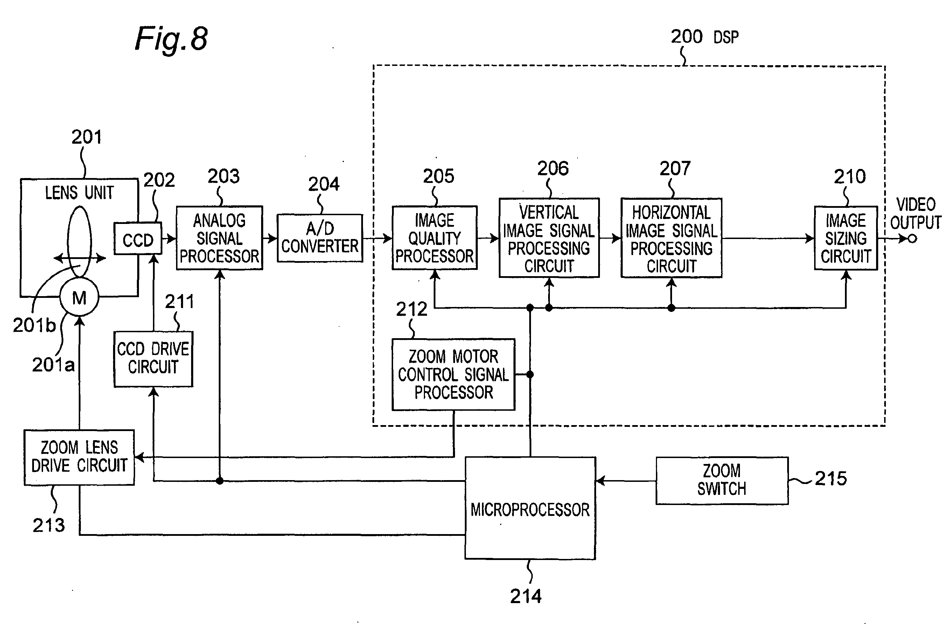

Conventionally, a digital zoom effect is achieved with a digital signal processing zoom circuit. The configuration of a conventional image zooming system is described below with reference to the block diagram thereof shown in Fig. 8.

Referring to Fig. 8, the lens unit 201 includes a zoom lens 201b for optically enlarging and reducing images, and a zoom motor 201a for moving the zoom lens 201b along the optical axis of the lens. The CCD 202 is a charge-coupled device for imaging an incident optical signal of the subject and converting the optical signal to an electrical image signal. The analog signal processor 203 then boosts the output level of the image signal from the CCD 202. The A/D converter 204 is an analog/digital converter for converting the analog image signal output from the analog signal processor 203 to a digital signal.

The image quality processing circuit 205 of the digital signal processor 200 then applies gamma correction, aperture correction, or other image processing operation to the image signal from the A/D converter 204. The vertical image signal processing circuit 206 then processes the image from the image quality processing circuit 205 in the vertical scanning direction to compress the vertical line count of the image signal from the image quality processing circuit 205 according to the vertical line count of a particular television format. The horizontal image signal processing circuit 207 horizontally processes the image from the vertical image signal processing circuit 206 to compress the horizontal line count (horizontal pixel count) of the image signal from the vertical image signal processing circuit 206 according to the horizontal resolution of the particular television format.

The image size adjusting circuit 210 is the digital zooming circuit for electronically enlarging or reducing the image signal from the horizontal image signal processing circuit 207 to a desirable image size. The microprocessor 214 is the control means for controlling the circuits of the digital signal processor 200. The zoom switch 215 is equivalent to the zoom lever or zoom button of a typical video camera. The zoom switch 215 can be used for continuous optical and digital zooming.

The zoom motor control signal processor 212 outputs control signals controlling the zoom direction and amount, that is, the direction and distance of zoom lens movement, as instructed by the microprocessor 214 to the zoom lens drive circuit 213. The zoom lens drive circuit 213 drives the zoom motor 201a of the lens unit 201 based on the control signals from the zoom motor control signal processor 212. The CCD drive circuit 211 likewise drives the CCD 202 as controlled by the microprocessor 214.

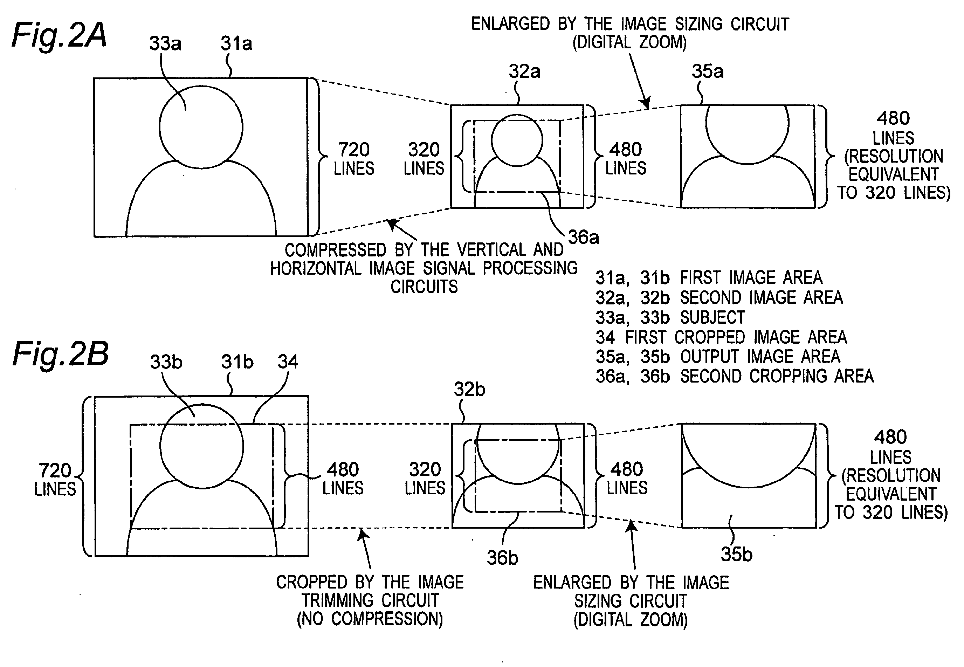

What happens when the zoom switch 215 is operated is described next with reference to Fig. 2 (a).

Referring to Fig. 2 (a), first image area 31a is captured by the CCD 202 and output from image quality processing circuit 205. The vertical line count in this example is 720 horizontal lines. Subject image 33a is formed in first image area 31a. The second image area 32a compresses the number of lines in the vertical and horizontal directions so that the image formed in the first image area 31a matches a particular television format. Images in the second image area 32a are thus compressed to a vertical line count of 480 horizontal lines in this example. Cropping area 36a is the image area presented on the second image area 32a when the zoom switch 215 is operated to enlarge the subject. As the magnification ratio of the zoom lens increases, the number of vertical and horizontal lines in the second cropping area 36a decreases. For example, if the digital zoom ratio is 1.5X, the zoomed image contains image information from a 320-line area of the original image. The output image area 35a is the image from second cropping area 36a converted to an image with a vertical line count of 480 lines for presentation.

Operation of the conventional zooming system configured as above is described below. Operation during normal recording, that is, when not zooming, is described first.

The optical signal of the subject incident on the CCD 202 through the lens groups of the lens unit 201 is converted to an electrical image signal and output to the analog signal processor 203. The signal level from the CCD 202 is low, and the analog signal processor 203 therefore applies a signal level amplification process to boost the signal, which is then A/D converted by the A/D converter 204. The output signal from the A/D converter 204 is input to image quality processing circuit 205, which applies gamma correction, aperture correction, or other signal processing, resulting in an image such as shown in first image area 31a in Fig. 2 (a) being input to the vertical image signal processing circuit 206.

The vertical image signal processing circuit 206 compresses the vertical line count of the image shown in the first image area 31a in Fig. 2 (a) to match the effective vertical line count of the television format. Because the vertical line count of an image from the image quality processing circuit 205 is 720 in this example, this line count compression process reduces the line count to 2/3 or 480 lines. The vertical image signal processing circuit 206 outputs the compressed image to the horizontal image signal processing circuit 207, which compresses the horizontal resolution according to the vertical compression as described above. The image resulting from this process is shown in second image area 32a in Fig. 2 (a). By thus compressing the line count of the image, it is possible to reduce only the size while keeping the same view angle as the image from the CCD 202.

The image signal from the horizontal image signal processing circuit 207 is then passed through the image size adjusting circuit 210 and output from the output terminal. A digital signal compression circuit display means then image compresses the image signal output from the image size adjusting circuit 210, and then outputs the compressed image signal to a display means (the LCD or electronic viewfinder of a video camera, for example) or recording means (a device for recording the signal to tape, disc, or other recording medium).

It should be noted that if a zoom operation controlled by the zoom switch 215 is not executed by the image size adjusting circuit 210 as in this example, the signal is output directly from the horizontal image signal processing circuit 207.

Operation when the zoom switch 215 is operated is described next.

When the user operates the zoom switch 215, the microprocessor 214 controls the zoom lens drive circuit 213 to determine the current zoom ratio of the optical zoom lens. If the zoom ratio is from 1X to 10X, the microprocessor 214 controls the zoom motor control signal processor 212 so that the input image is enlarged or reduced. This command causes the zoom motor control signal processor 212 to generate a control signal for driving the zoom lens 201b based on how the zoom switch 215 is operated, that is, whether to zoom to telephoto or wide angle, and how far. The resulting control signal is output to the zoom lens drive circuit 213. The zoom lens drive circuit 213 controls the zoom motor 201a based on this control signal, and thereby moves the zoom lens 201b along the optical axis. The zooming direction and distance are determined by the control signal generated by the zoom motor control signal processor 212.

The zoom lens 201b thus moves to the controlled position, the CCD 202 converts the optical signal to an electrical signal, and outputs this electrical signal to the analog signal processor 203 as an image signal. The analog signal processor 203 boosts the image signal level and outputs the boosted image signal to the A/D converter 204 for analog/digital signal conversion. The resulting digital image signal is then corrected by gamma correction or aperture correction, for example, by the image quality processing circuit 205, and the vertical and horizontal resolution are then compressed by the vertical image signal processing circuit 206 and horizontal image signal processing circuit 207 to match the line count of the specified television signal format. The compressed image signal is then output through the image size adjusting circuit 210.

With optical zooming, the image enlarged or reduced by the zoom lens 201b is input to the image quality processing circuit 205 as the image shown in first image area 31a in Fig. 2 (a). The image signal ultimately output from the output terminal is therefore the image as shown in second image area 32a.

If the zoom ratio is 10X or greater, however, the optical zoom is in the far telephoto position and digital zooming is therefore applied. In this case the microprocessor 214 instructs the image size adjusting circuit 210 to enlarge or reduce the input image signal accordingly. The image signal shown in second image area 32a in Fig. 2 (a) is input to the image size adjusting circuit 210, and the middle part of this image signal (the cropping area 36a) is extracted and digitally enlarged to the zoom ratio specified by the zoom switch 215. An image signal enlarged 1.5X, for example, is acquired by extracting a 320-line section from the middle of the second image area 32a containing 480 horizontal lines, and then digitally converting this 320-line section to a 480-line image.

This method is taught in Japanese Unexamined Patent Appl. Pub. H06-350892.

### BRIEF SUMMARY OF THE INVENTION

With the conventional configuration described above the vertical image signal processing circuit 206 and horizontal image signal processing circuit 207 compress the vertical and horizontal line counts of the image, and the compressed image is then enlarged by the image size adjusting circuit 210. This enlarging process degrades the image resolution (particularly the vertical resolution), and thus reduces overall image quality.

The present invention is directed to solving this problem, and an object of the invention is to provide an image enlarging apparatus and method providing an instantaneous image enlargement function with little image degradation.

To achieve this object, an image enlarging apparatus according to the present invention has a charge-coupled device for converting an optical signal of a subject to an electrical image, a signal processing means for compressing the line counts of images from the CCD to the line counts of a particular television format, a user-operable selection means, and a control means for controlling the signal processing means based on how the selection means is operated. When the selection means is operated, the control means instructs the signal processing means to skip the image compression process and crop the image from the CCD to an image of the line count matching the television format.

Thus comprised, the image enlarging apparatus and method of this invention provides an instantaneous image zooming effect with little image quality degradation.

Other objects and attainments together with a fuller understanding of the invention will become apparent and appreciated by referring to the following description and claims taken in conjunction with the accompanying drawings.

### BRIEF DESCRIPTION OF THE SEVERAL VIEWS OF THE DRAWING

Fig. 1 is a block diagram showing the configuration of an image enlarging apparatus according to a first embodiment of the present invention;
Fig. 2 (a) and (b) are schematic diagrams illustrating the image zooming concept of first and second zoom functions;
Fig. 3 is a graph showing the relationship between zoom ratio and image size in this embodiment of the invention;
Fig. 4 is a graph showing the relationship between image size and resolution in this embodiment of the invention;
Fig. 5 is a graph showing application of the cropping area of the image trimming circuit in this embodiment of the invention;
Fig. 6 is a block diagram showing the image trimming circuit in detail;
Fig. 7 is a schematic diagram describing the operation of the image trimming circuit; and
Fig. 8 is a block diagram showing the configuration of a conventional image enlarging apparatus.

### DETAILED DESCRIPTION OF THE INVENTION

The present invention as described in claim 1 below has a charge-coupled device for converting an optical signal of a subject image to an electrical image signal, a signal processing means for compressing the line counts of images from the CCD to the equivalent effective line counts of a particular television format, a user-operable selection means, and a control means for controlling the signal processing means based on operation of the selection means. When the selection means is operated, the control means instructs the signal processing means to skip the image compression process and crop the image from the CCD to an image of the line count matching the television format. The apparatus and method of the present invention therefore provides an immediate digital image zooming effect with little image quality degradation.

A preferred embodiment of the invention thus comprised is described next below with reference to the accompanying figures.

### * First embodiment

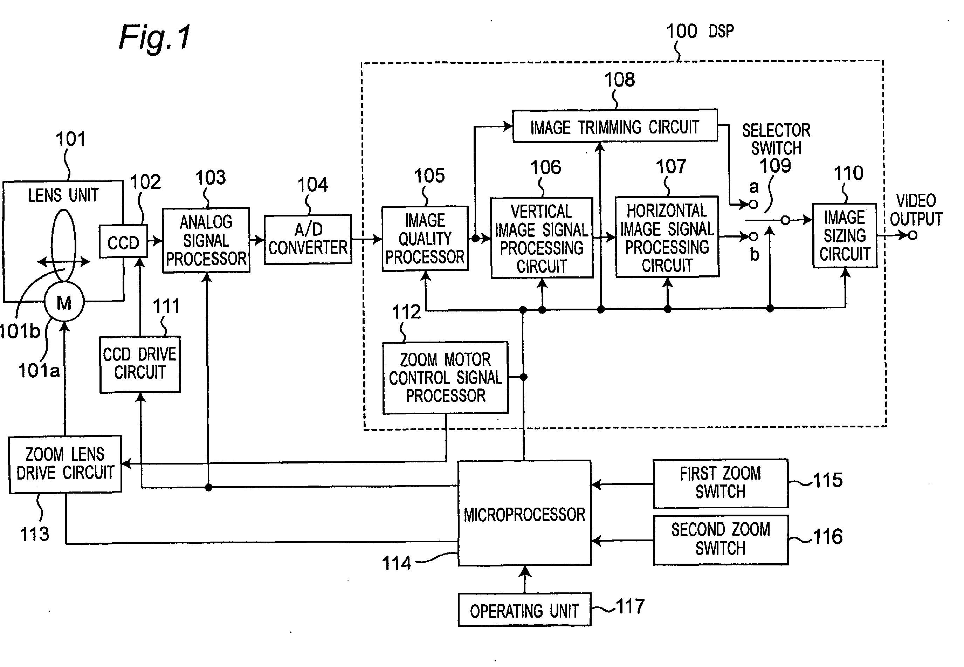

Fig. 1 is a block diagram showing the configuration of an image enlarging apparatus according to a preferred embodiment of the invention. Referring to Fig. 1, the lens unit 101 has a zoom lens 101b for optically enlarging or reducing a subject image, and a zoom motor 101a for moving the zoom lens 101b along the optical axis of the lens. The CCD 102 images and converts the incident optical signal of the subject to an electrical image signal. The analog signal processor 103 then boosts the output signal level of the image signal from the CCD 102. The A/D converter 104 then analog/digital converts the analog image signal from the analog signal processor 103 to a digital signal, and thus supplies a digital image signal to the digital signal processor (DSP) 100.

The image quality processor 105 of the DSP 100 applies gamma correction, aperture correction, or other correction process to the image signal from the A/D converter 104. The vertical image signal processing circuit 106 applies signal processing in the vertical direction of the image from the image quality processor 105, and more specifically compresses the vertical line count of the image signal from the image quality processor 105 according to the vertical line count of a particular television format. The horizontal image signal processing circuit 107 applies signal processing in the horizontal direction to the image from the vertical image signal processing circuit 106, and more particularly compresses the horizontal line (pixel) count of the image signal from the vertical image signal processing circuit 106 according to the horizontal line count of the television format. Note that the vertical and horizontal image signal processing circuits 106 and 107 constitute the signal processing means of the accompanying claims. The image trimming circuit 108 crops the image signal from the image quality processor 105 to a center part of the image.

Selector switch 109 then selects and passes to the image sizing circuit 110 signal output from the horizontal image signal processing circuit 107 or from the image trimming circuit 108. The image sizing circuit 110 then digitally enlarges or reduces the image signal from the horizontal image signal processing circuit 107 or image trimming circuit 108, and outputs the resized image. The image sizing circuit 110 is thus a so-called digital zoom circuit.

A microprocessor 114 is a control means for controlling the circuits of the DSP 100. A first zoom switch 115 is equivalent to the zoom lever or button of a normal video camera, and is used for continuous zooming through the entire optical and digital zooming range. The function for enlarging an image as a result of operating this first zoom switch 115 is referred to herein as a first enlarging function. The second zoom switch 116 is a selection means that can be operated to immediately acquire an enlarged image. In this embodiment of the invention the image presented by operating the second zoom switch 116 is magnified 1.5X from the image observed before the second zoom switch 116 is operated. The enlarging function that is operated using this second zoom switch 116 is referred to herein as the second enlarging function (or instantaneous zoom function). The operating unit 117 is used to control the part of the image that is cropped by the image trimming circuit 108 and presented.

The zoom motor control signal processor 112 of the DSP 100 is controlled by the microprocessor 114 and outputs control signals telling the zoom lens drive circuit 113 the direction and distance to move the zoom lens. The zoom lens drive circuit 113 drives the zoom motor 101a of the lens unit 101 based on control signals from the zoom motor control signal processor 112, and the CCD drive circuit 111 drives the CCD 102 as controlled by the microprocessor 114.

The image quality processor 105, vertical image signal processing circuit 106, horizontal image signal processing circuit 107, image trimming circuit 108, selector switch 109, image sizing circuit 110, and zoom motor control signal processor 112 form a DSP 100, which can be built in a single chip.

Fig. 2 schematically describes the operating principle of an image enlarging apparatus, (a) describing operation when the first zoom switch 115 is operated, and (b) describing operation when the second zoom switch 116 is operated.

In Fig. 2 the first image areas 31a and 31b denote the image area captured by the CCD 102 and output from the image quality processor 105, and thus represent the raw photographed image. The vertical and horizontal line counts of this photographed image are greater than the vertical and horizontal line counts of the television format.

The vertical line count as used herein is the number of horizontal lines counted in the vertical direction of the image, and thus denotes the vertical resolution of the image. The horizontal line count is the number of pixels on each horizontal line, and thus denotes the horizontal resolution of the image. In this preferred embodiment of the invention there are 720 scan lines in the vertical direction of the captured image, and the vertical line count of the television format is 480. The line count in the horizontal direction, that is, the number of pixels on each horizontal line, is 971 in the captured image and 720 in the television format.

It will be obvious that the present invention is being described with reference to the NTSC television format by way of example only, and the invention can also be applied to the PAL format, for example.

Subject images 33a and 33b are formed in first image areas 31a and 31b. The second image area 32a represents a compressed image acquired by compressing the number of lines in the vertical and horizontal directions so that the image formed in the first image area 31a matches a particular television format. Second image area 32b represents a cropped image acquired by trimming the photographed image in first image area 31b to the vertical and horizontal line counts of the television format.

The cropping area 34 is the area extracted from the middle of the photographed image when the second zoom switch 116 is operated. The vertical line count of this cropping area 34 is 480 lines in order to match the vertical line count of the television format.

Cropping area 36a is the area of the second image area 32a that is extracted when the first zoom switch 115 is operated, and cropping area 36b is the area of the second image area 32b that is extracted when the second zoom switch 116 is operated. The higher the digital zoom ratio, the lower the vertical and horizontal line counts of second cropping areas 36a and 36b. If the digital zoom is set to 1.5X, for example, the extracted image area is 320 lines high. Output image areas 35a and 35b contain the images from the second cropping areas 36a and 36b converted to a 480 vertical line count for presentation.

It should be noted that while only processing in the vertical direction is described above, the images are similarly processed in the horizontal direction.

When the first zoom switch 115 is operated, the microprocessor 114 activates the image quality processor 105, vertical image signal processing circuit 106, horizontal image signal processing circuit 107, and image sizing circuit 110, and sets the selector switch 109 to side b. When the second zoom switch 116 is operated, the microprocessor 114 activates the image quality processor 105, image trimming circuit 108, and image sizing circuit 110, and sets the selector switch 109 to side a. If both first zoom switch 115 and second zoom switch 116 are operated simultaneously, the second zoom switch 116 is ignored and operation continues as though the first zoom switch 115 was operated.

Operation during normal photography not using the zoom function is described first.

The optical image of the subject incident on the CCD 102 through the lens groups of the lens unit 101 is converted to an electrical image signal, which is output to the analog signal processor 103. The signal level of the CCD 102 output is low, and the analog signal processor 103 therefore boosts the signal level before conversion from an analog signal to a digital signal by the A/D converter 104. The output signal from the A/D converter 104 is input to the image quality processor 105, which applies gamma correction, aperture correction, or other signal processing operation, and the image shown in the first image area 31a in Fig. 2 (a) is thus input to the vertical image signal processing circuit 106.

The vertical image signal processing circuit 106 then compresses the vertical line count of the image shown in first image area 31a in Fig. 2 (a) to a line count matching the equivalent effective vertical line count of the television format. Because the vertical line count of images from the image quality processor 105 is 720 in this embodiment, this line count is compressed to 2/3 or 480 lines.

The image output from the vertical image signal processing circuit 106 is then input to the horizontal image signal processing circuit 107 for compressing the horizontal line count according to the vertical compression. The image at this time is as shown in the second image area 32a. By thus compressing the line counts of the image, the view angle of the image from the CCD 102 remains unchanged while the size of the image is reduced.

The image signal from the horizontal image signal processing circuit 107 is then output through selector switch 109 and image sizing circuit 110 and the output terminal. A digital signal compression circuit display means then image compresses the output image signal, and then outputs the compressed image signal to a display means (the LCD or electronic viewfinder of a video camera, for example) or recording means (a device for recording the signal to tape, disc, or other recording medium).

It should be noted that if a zoom operation controlled by the first zoom switch 115 is not executed by the image size adjusting circuit 110 as in this example, the signal is output directly from the horizontal image signal processing circuit 107.

The zoom operation is described next.

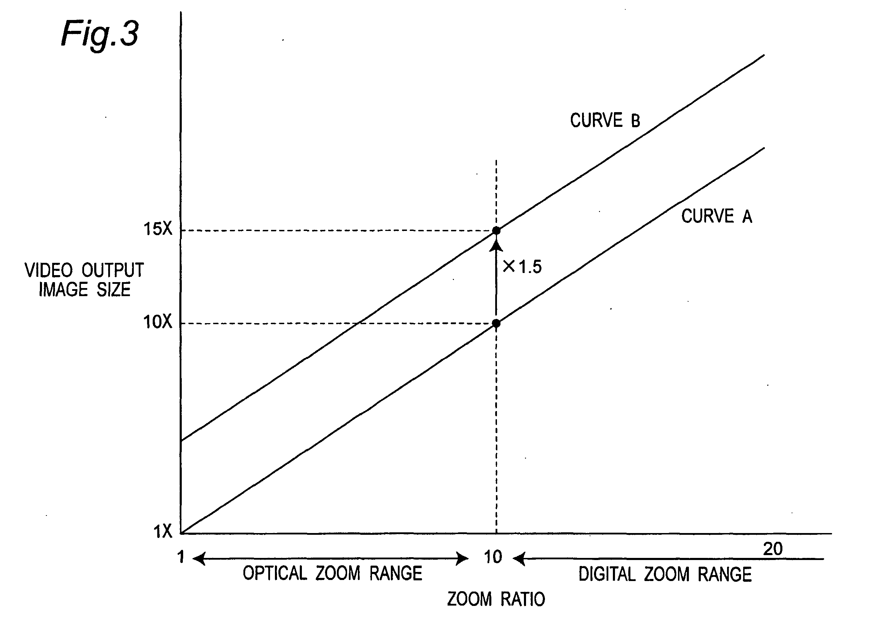

Fig. 3 is a graph showing the relationship between zoom ratio and output image size. Curve A represents performance when the first enlarging function is operated without using the second enlarging function, and curve B represents performance when the first enlarging function is operated when the second enlarging function is also used. These curves assume a zoom system featuring a 10X optical zoom and a 20X or higher digital zoom. The optical zoom is used for image enlargement from 1X to 10X, and the digital zoom is used for image enlargement at zoom ratios exceeding 10X. As shown in the figure, the output image size increases as the zoom ratio increases.

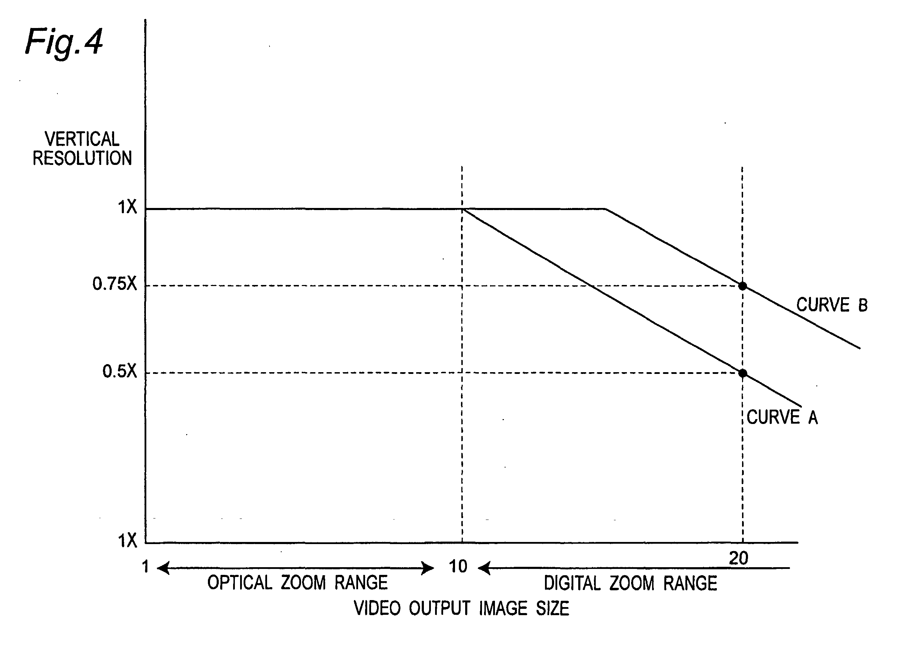

Fig. 4 is a graph showing the relationship between zoom ratio and vertical resolution. Curve A represents performance when the first enlarging function is operated without using the second enlarging function, and curve B represents performance when the first enlarging function is operated when the second enlarging function is also used. As shown in the figure, there is no drop in the vertical resolution on either curve A or B in the optical zoom range, that is, when the zoom ratio is from 1X to 10X. However, when the zoom ratio exceeds 10X, that is, enters the digital zoom range, the vertical resolution drops on curve A when the zoom ratio surpasses 10X.

Operation when only the first zoom switch 115 is used is described next.

When the user operates the first zoom switch 115, the microprocessor 114 controls the zoom lens drive circuit 113 and acquires the current optical zoom ratio. If the zoom ratio is from 1X to 10X, the microprocessor 114 instructs the zoom motor control signal processor 112 so that the input image is enlarged or reduced accordingly. This command causes the zoom motor control signal processor 112 to generate a control signal for driving the zoom lens 101b based on first zoom switch 115 operation, that is, how far to zoom and whether to zoom in the telephoto or wide-angle direction. The resulting control signal is applied to the zoom lens drive circuit 113, which drives the zoom motor 101a based on this control signal and moves the zoom lens 101b along the optical axis of the lens. The zoom direction and distance are determined by the control signal generated by the zoom motor control signal processor 112.

When the zoom lens 101b moves to the specified position, the CCD 102 converts the optical signal to an electrical signal, and outputs the electrical image signal to the analog signal processor 103. The analog signal processor 103 boosts the signal level of the analog image signal and then outputs the analog image signal to the A/D converter 104 for conversion to a digital signal. The resulting digital image signal is then processed by the image quality processor 105 for gamma correction or aperture correction, for example, and the vertical and horizontal line counts of the corrected image signal are then compressed by the vertical and horizontal image signal processing circuits 106 and 107 to match the line counts of the particular television signal format. The compressed image signal is then output through the selector switch 109 and image sizing circuit 110.

When using the optical zoom, the image enlarged or reduced by the zoom lens 101b is input to the image quality processor 105 as the image shown in first image area 31a in Fig. 2 (a), and the image signal ultimately output from the output terminal is the image shown in second image area 32a.

When the zoom ratio exceeds 10X, however, the optical zoom is set to the maximum telephoto position and digital zooming is therefore needed. In this case the microprocessor 114 controls the image sizing circuit 110 to enlarge or reduce the input image signal. The image signal shown in second image area 32a in Fig. 2 (a) is input to the image sizing circuit 110, which then extracts the middle part (i.e., cropping area 36a) of the image signal and digitally enlarges the extracted image area to the magnification indicated by the first zoom switch 115. In the example shown, 320 horizontal lines are extracted from the center of the second image area 32a, which has a vertical resolution of 480 horizontal lines, digitally enlarges the extracted image area to an image with 480 horizontal lines, and outputs the result to output image area 35a as the image signal enlarged 15X.

A 320-line image can be enlarged to a 480-line image using a line interpolation process whereby signals for the non-existent lines are interpolated based on signal values in existing adjacent lines. The ultimately output image signal is therefore a 480-line image presented in output image area 35a, but the image resolution is equivalent to only 320 lines.

An approximately 320-line image area is cropped from the second image area 32a in order to enlarge the image 15X in the above example. Because the vertical line count of the output image area 35a is fixed at 480 lines, however, the size of the cropping area 36a becomes smaller and the vertical line count decreases when the enlargement ratio is even higher. Therefore, as will also be known from curve A in Fig. 4, the vertical resolution drops as the zoom ratio increases.

Operation when the second zoom switch 116 is operated is described next.

When the user operates the second zoom switch 116, the microprocessor 114 sets the selector switch 109 to side a and activates the image trimming circuit 108. This causes the image quality processor 105 to output the processed image signal to the image trimming circuit 108 for image cropping. This cropping operation is described below with reference to Fig. 2 (b). As described above, the image signal acquired through the lens unit 101, CCD 102, analog signal processor 103, A/D converter 104, and image quality processor 105 has a vertical line count of 720 lines as shown in first image area 31b in Fig. 2 (b). This image signal is input to the image trimming circuit 108, which extracts the center 480 lines of the first image area 31b as shown in cropping area 34, thereby acquiring an image signal as shown in second image area 32b. As shown in the figure, the top and bottom of the subject 33 are cut off in the second image area 32b, and the subject image is relatively larger. Note that the vertical and horizontal line counts are not compressed in this cropping process. The area cropped in the horizontal direction is also determined automatically according to the vertical line count of the cropped image area so that the vertical and horizontal line counts of the final image are the same as those of the television format. The resulting image signal is then output to the image sizing circuit 110.

If the first zoom switch 115 is not operated or is operated but the zoom ratio is within the optical zoom range (1X to 10X zoom ratio as shown in Fig. 3), the image sizing circuit 110 outputs the image without enlargement or reduction.

In the optical zoom range from 1X to 10X as shown in Fig. 3, the size of the image acquired when the second zoom switch 116 is operated is 1.5X the image size before the second zoom switch 116 was operated. In other words, the relationship between zoom ratio and image size when the second zoom switch 116 is not operated is described by curve A in Fig. 3, but is described by curve B in Fig. 3 when the second zoom switch 116 is then operated. For example, if the zoom ratio is set to 10X and the second zoom switch 116 is then operated, the actual image size is enlarged from 10X to 15X. Furthermore, as shown in Fig. 4, in the optical zoom range from 1X to 10X, the image enlarged by the lens unit 101 is cropped by the image trimming circuit 108 and there is no drop in resolution because there is no vertical and horizontal compression.

Furthermore, because there is no line count compression by the vertical and horizontal image signal processing circuits 106 and 107 and the image cropped from the first cropping area 34 is output directly, response, that is, the time from when the second zoom switch 116 is operated to output of the enlarged image, is significantly faster than when the first zoom switch 115 is operated to acquire an image enlarged 1.5 times.

Furthermore, if the zoom position when the second zoom switch 116 is operated is in the digital zoom range of the first zoom switch 115 (that is, set to a zoom ratio higher than 10X; see Fig. 3), or if the first zoom switch 115 is operated while zooming with the second zoom switch 116 and the zoom ratio enters the digital zoom range, the microprocessor 114 controls image sizing circuit 110 to enlarge or reduce the image signal output from the image trimming circuit 108 accordingly. Referring to Fig. 2 (b), the image sizing circuit 110 crops the image signal in second image area 32b acquired from the image trimming circuit 108 to the image shown in second cropping area 36b.

The size of this second cropping area 36b varies according to the zoom ratio of the digital zoom. As the zoom ratio increases, the size of the second cropping area 36b decreases. The image signal extracted from the second cropping area 36b is then enlarged to the vertical line count (720 lines) and horizontal line count (480 lines) of the television format, and an image signal as shown in output image area 35b is output.

The relationship between zoom ratio and image size when using the second enlarging function in the digital zoom range is thus as shown and described with reference to Fig. 3. In this case zoom operation changes from curve A to curve B in Fig. 3, and an image 1.5 times larger than the image presented at the same zoom ratio on curve A is acquired. As shown by curve B in Fig. 4, there is also no drop in resolution at a zoom ratio from 10X to 15X because the image enlarged by the optical zoom is enlarged 1.5X by the image trimming circuit 108. When the zoom ratio exceeds 15X, however, the actual zoom operation changes from the optical zoom to the digital zoom, and resolution therefore drops as the zoom ratio increases. This drop in resolution is less than when the second zoom switch 116 is not used, however, as indicated by curve A in Fig. 4. At a zoom ratio of 20X, for example, curve A indicates a drop in the vertical resolution to approximately 0.5 times the native resolution, while curve B shows a drop to approximately 0.75 times the native resolution when the second zoom switch 116 is used.

It will thus be apparent that when the second zoom switch 116 is used in this embodiment of the invention the image trimming circuit 108 crops the image to a defined area of the captured image without using compression, thereby improving the resolution of the output image while eliminating the time needed for image compression or other signal processing. As a result, an enlarged image can be immediately presented.

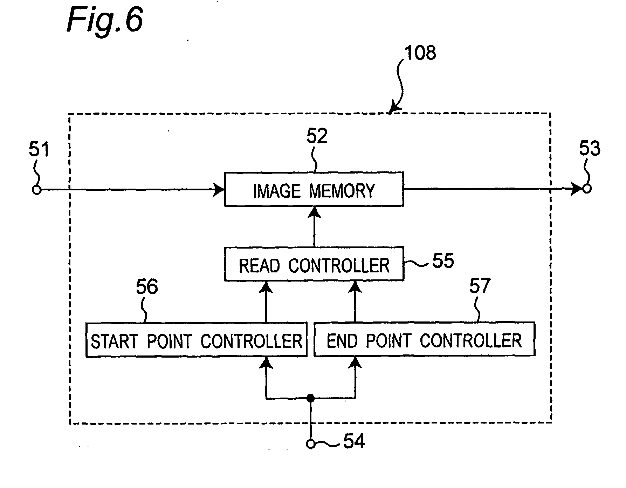

Fig. 6 is a block diagram showing the internal configuration of the image trimming circuit 108 shown in Fig. 1 and further described below.

Image signals from the image quality processor 105 are input to input terminal 51. Image signals input to the input terminal 51 are stored to image memory 52, which could be frame memory or line memory but is preferably line memory due to cost considerations. Image signals read from the image memory 52 are output to the selector switch 109 in Fig. 1 from the output terminal 53. Control signals from the microprocessor 114 are applied to control input terminal 54. Based on a control signal from the microprocessor 114, start point controller 56 sets the cropping area start point (the "start point" below) and outputs a start point signal. Likewise based on a control signal from the microprocessor 114, the end point controller 57 sets the cropping area end point (the "end point" below) and outputs an end point signal. Based on the start and end points from the start point controller 56 and end point controller 57, the read controller 55 controls reading images from the image memory 52.

Operation of the image trimming circuit 108 thus comprised is described below.

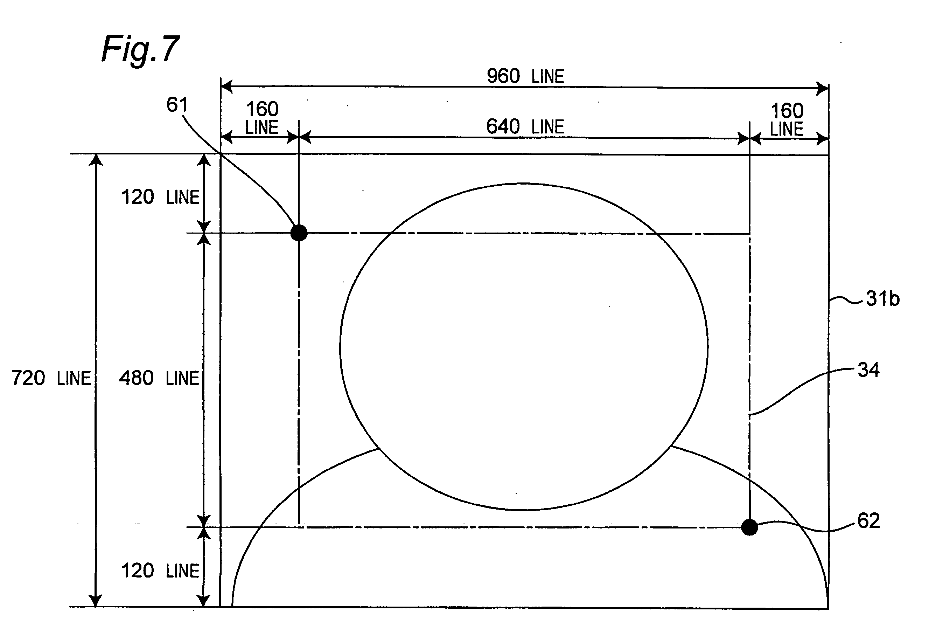

The start and end points are described first referring to Fig. 7.

Fig. 7 corresponds to the image shown in Fig. 2 (b) with various line count values shown for easier understanding. Start point 61 and end point 62 are shown. The image trimming circuit 108 thus defines one corner point of a rectangular cropping area as the start point 61 and sets the diagonally opposite corner point as the end point 62 on the photographed image.

The start point 61 and end point 62 are each defined by the (x,y) coordinate values from the top left corner of the first image area 31b. More specifically, as shown in Fig. 7, the y-coordinate of the start point 61 of the cropping area 34 is the line count from the first horizontal line of the first image area 31b, and the x-coordinate is the line count (pixel count) from the left end of that line in the horizontal direction. In the example shown here the top 120 lines from the top horizontal line and the first 160 vertical lines (pixels) from the left edge are not needed. The starting point in the vertical direction, i.e., the y-coordinate of the start point 61, is therefore line 121, and the starting point in the horizontal direction, i.e., the x-coordinate, is line (pixel) 161.

The coordinates of the end point 62 of the cropping area 34 in Fig. 7 are similarly determined. More specifically, the y-coordinate of the end point 62 of the cropping area 34 is the line count from the first horizontal line of the first image area 31b, and the x-coordinate is the line count (pixel count) from the left end of that line in the horizontal direction. The end point in the vertical direction, i.e., the y-coordinate, is therefore line 600, and the end point in the horizontal direction, i.e., the x-coordinate, is line (pixel) 800.

It will be obvious that while the start and end points are both defined in this example, the end point could be calculated on-the-fly from the start point based on the 4:3 aspect ratio of the selected television format.

The size of the cropped image signal read from the image memory 52 is therefore 480 horizontal lines by 640 vertical lines.

Operation of the image trimming circuit 108 is described more specifically below.

When the second zoom switch 116 is operated, the microprocessor 114 sets the selector switch 109 to side a so that image signals from the image quality processor 105 are applied to the input terminal 51 of the image trimming circuit 108. Image signals input to the input terminal 51 are written temporarily to image memory 52.

When the second zoom switch 116 is operated, the control signal from the microprocessor 114 is also applied to the control input terminal 54. The control signal input to the control input terminal 54 contains a control signal for activating the image trimming circuit 108 as well as the start and end point values of the cropping area.

The control signal applied to the control input terminal 54 is then applied to the start point controller 56 and end point controller 57. The start point controller 56 then generates a start point signal based on the value of the start point detected from the applied control signal. The end point controller 57 [56, sic] likewise generates an end point signal based on the coordinates of the end point detected from the control signal. These start and end point signals are then input to the read controller 55.

Based on the start point signal, the read controller 55 determines where to start cropping the image signal written to the image memory 52. Using a line counter not shown, the read controller 55 counts the vertical and horizontal line counts to locate the coordinates of the start point 61 in Fig. 7, that is, line 121 vertically and line 161 horizontally. Based on the end point signal, the read controller 55 likewise determines the end point of the cropped image. Using a line counter not shown, the read controller 55 counts the vertical and horizontal line counts to locate the coordinates of the end point 62 in Fig. 7, that is, line 600 vertically and line 800 horizontally. The limits of the first cropping area 34 are thus determined.

Using the line counter, the read controller 55 then counts the vertical and horizontal line counts of the image signal in the image memory 52. Reading starts when the start point 61 is detected and continues until the end point 62 is detected, thereby reading the image signal for the area shown as first cropping area 34. The image signal read from image memory 52 is output from output terminal 53 and then output from side a of the selector switch 109 shown in Fig. 1.

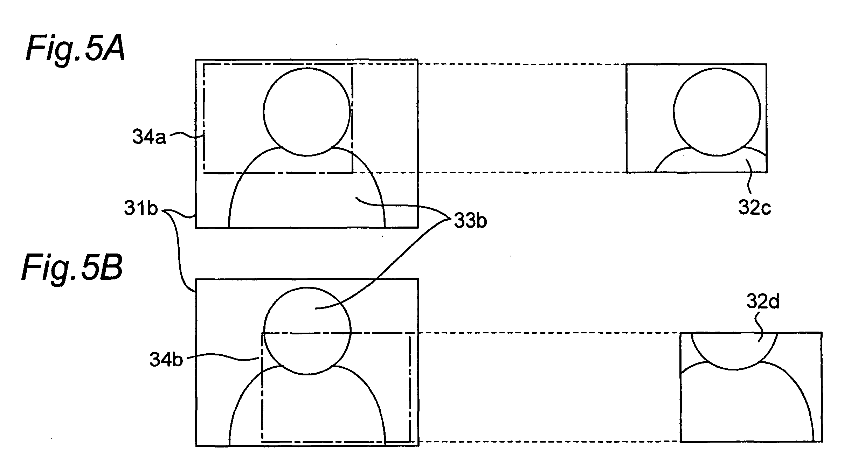

The location of the first cropping area 34 can be desirably set as indicated by frames 34a and 34b in Fig. 5 using an operating unit 117 such as cursor keys, for example, as shown in Fig. 8. Each time the operating unit 117 is worked to set the cropping area, the microprocessor 114 outputs the start and end points of the selected frame 34a (see Fig. 5 (a)) to the image trimming circuit 108. Based on these start and end point values, the image trimming circuit 108 controls cropping the image to the part delineated by the defined frame 34a (see Fig. 5 (a)).

If the operating unit 117 is operated again, the microprocessor 114 outputs the start and end points of the new frame 34b (see Fig. 5 (b)) to the image trimming circuit 108. Based on these start and end point values, the image trimming circuit 108 controls cropping the image to the part delineated by the new frame 34b (see Fig. 5 (b) ) .

The first cropping area 34 is assumed to be in the middle of the first image area 31b as shown in Fig. 2 (b) in the embodiment described above. As will be apparent from Fig. 5, however, the cropping area 34 could be set to any desired area and is not limited to the middle of the image. As shown in Fig. 5 (a), for example, the cropping area could be an area 34a at the top left, or an area 34b at the bottom right, of the first image area 31b. The resulting cropped images are shown as 32c and 32d, respectively. The cropping area can be freely set using cursor keys to set the top left and bottom right corners, for example, or the cropping areas could be preprogrammed so that operating the second zoom switch 116 toggles between them.

Our invention can thus output an enlarged image with little to no image degradation, and the zooming effect can be accessed immediately by a simple switch operation.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. An image enlarging apparatus comprising:
an imaging means for outputting a photographed image of a subject wherein a vertical line count and horizontal line count of the output image are greater than a vertical line count and horizontal line count of a television format;
an image cropping means for cropping the photographed image and generating a cropped image in which the vertical line count and horizontal line count of the photographed image are adjusted to match the vertical line count and horizontal line count of the television format; and
an enlargement processing means for enlarging the cropped image.

2. An image enlarging apparatus as described in claim 1, wherein the image cropping means specifies on the photographed image a start point at one corner of a rectangular cropped image and an end point at a diagonally opposite corner of the rectangular cropped image.

3. An image enlarging apparatus as described in claim 1, further comprising a cropping area determining means for setting the location of the cropped image in the photographed image.

4. An image enlarging apparatus as described in claim 1, further comprising an image compression processing means disposed parallel to the image cropping means for compressing the photographed image so that the vertical line count and horizontal line count of the photographed image match the vertical line count and horizontal line count of the television format, and generating a compressed image; and
a switching means for selecting the cropped image or compressed image, and sending the selected image to the enlargement processing means.

5. An image enlarging method comprising steps of:
producing a photographed image of a subject wherein a vertical line count and horizontal line count of the output image are greater than a vertical line count and horizontal line count of a television format;
cropping the photographed image and generating a cropped image in which the vertical line count and horizontal line count of the photographed image are adjusted to match the vertical line count and horizontal line count of the television format; and
enlarging the cropped image.

6. An image enlarging method as described in claim 5, wherein the image cropping process specifies on the photographed image a start point at one corner of a rectangular cropped image and an end point at a diagonally opposite corner of the rectangular cropped image.

7. An image enlarging method as described in claim 5, further comprising a step of setting the location of the cropped image in the photographed image.

8. An image enlarging method as described in claim 5, further comprising steps of:
compressing the photographed image so that the vertical line count and horizontal line count of the photographed image match the vertical line count and horizontal line count of the television format, and generating a compressed image; and
selecting the cropped image or compressed image, and enlarging the selected image.
